# EUROPÄISCHE PATENTSCHRIFT

(11) **EP 1 253 331 B1**
(45) Veröffentlichungstag und Bekanntmachung des Hinweises auf die Patenterteilung: **13.10.2004**
(21) Anmeldenummer: 02006236.0
(22) Anmeldetag: 20.03.2002
(51) Int. Cl.: F16B 13/08

(54) **Kippanker**
Tilting anchor
Dispositif d'ancrage basculant

(30) Priorität: 27.04.2001 DE 20107350 U
(43) Veröffentlichungstag der Anmeldung: 30.10.2002
(73) Patentinhaber: fischerwerke Artur Fischer GmbH & Co. KG, 72178 Waldachtal (DE)
(72) Erfinder: Frischmann, Albert, 79341 Kenzingen (DE)

(56) Entgegenhaltungen:
- DE-B- 1 193 229
- US-A- 4 043 245
- US-A- 5 108 240

## Beschreibung

Die Erfindung betrifft einen Kippanker zur Hohlraumbefestigung mit den Merkmalen des Oberbegriffs des Anspruchs 1 (US 5 108 240 A).

Ein bekannter Kippanker weist ein balkenartiges Ankerteil in Form eines U-Profilstabs auf. Im Ankerteil ist ein als zylindrischer Bolzen ausgebildetes Gelenkstück um eine Achse quer zum Ankerteil drehbar gelagert. Der Bolzen weist ein Gewindeloch auf, das den Bolzen quer durchsetzt und in das ein Gewindestab eingeschraubt ist. Der Bolzen ist außermittig zu einem Ende des Ankerteils hin versetzt angeordnet, so dass das Ankerteil auf einer Seite weiter vom Bolzen absteht als auf der anderen Seite.

Zur Hohlraumbefestigung wird das Ankerteil des bekannten Kippankers bezüglich des Gewindestabs so verschwenkt, dass es sich in etwa in einer Linie mit dem Gewindestab befindet und der Gewindestab in einem Innenraum des U-förmigen Ankerteils einliegt. In diesem Zustand wird der Kippanker durch ein Loch in bspw. einer Gipskartonplatte durchgeführt. Sobald das Ankerteil vollständig durch die Gipskartonplatte durchgeführt ist, schwenkt es schwerkraftbedingt in eine Stellung quer zum Gewindestab. Am Gewindestab wird der Kippanker soweit zurückgezogen, dass das Ankerteil an der Rückseite der Gipskartonplatte anliegt. Der Kippanker kann nun belastet und ein Gegenstand am Gewindestab des Kippankers befestigt werden.

Die am Gewindestab angreifende Last wird von dem als zylindrischer Bolzen ausgebildeten Gelenkstück aufgenommen, das in zwei sich gegenüberliegenden Lagerbohrungen der Seitenteile des U-förmigen Ankerteils eingehängt ist. Zur Aufnahme der Lasten ist das Gelenkstück ein Metallteil, das aufgrund des den Bolzen quer durchsetzenden Gewindelochs einen Mindestdurchmesser aufweisen muss. Dem Durchmesser des bolzenförmigen Gelenkstücks entsprechen die Lagerbohrungen in den Seitenteilen des Ankerteils, so dass die Seitenteile zum Unterbringen der Lagerbohrungen eine entsprechende Höhe aufweisen müssen.

Der Erfindung liegt die Aufgabe zugrunde, einen Kippanker der vorstehend erläuterten Art so weiterzubilden, dass eine kostengünstige Herstellung ermöglicht wird.

Diese Aufgabe wird erfindungsgemäß durch die Merkmale des Anspruchs 1 gelöst. Der erfindungsgemäße Kippanker weist ein am U-förmigen Ankerteil zwischen den beiden Seitenteilen angeordnetes Gelenkstück auf, das mit einer den Gewindestab haltenden Aufnahmebohrung versehen ist. Mit dem Gewindestab kann das Gelenkstück gegenüber dem Ankerteil soweit verschwenkt werden, dass der Gewindestab mit der Längsrichtung des Ankerteils fluchtet und in dem U-Profil des Ankerteils einliegt. Zur Hohlraumbefestigung wird das Ankerteil in dieser Stellung des Gewindestabs durch ein Loch bspw. in einer Gipskartonplatte durchgeführt. Sobald das Ankerteil vollständig durch das Loch durchgeschoben ist, wird es in eine rechtwinklig zum Gewindestab stehende Position verschwenkt und auf der Rückseite der Gipskartonplatte aufgesetzt. In dieser Position fluchtet die Aufnahmebohrung im Gelenkstück und damit der Gewindestab mit dem im Ankerteil angeordneten Gewindeloch. Der Gewindestab wird nunmehr in das Gewindeloch des Ankerteils eingeschraubt und damit eine Zugkraft aufnehmende Verbindung zwischen Ankerteil und Gewindestab hergestellt. Nach dem Einschrauben des Gewindestabs in das Gewindeloch kann ein Gegenstand am Gewindestab des Kippankers befestigt werden. Unter Gewindestab ist jedes Bauteil zu verstehen, das ein Schraubengewinde aufweist, also bspw. auch eine Schraube oder ein Gewindehaken. Da die Zugkraft nicht mehr über das Gelenkstück sondern direkt über das Ankerteil aufgenommen wird, hat das Gelenkstück lediglich noch die Aufgabe, das Verschwenken des Gewindestabs am Ankerteil zu ermöglichen. Damit kann das Gelenkstück kostengünstig im Spritzgussverfahren aus Kunststoff hergestellt werden. Ferner reicht für die Verschwenkfunktion des Gelenkstücks eine Clipsverbindung mit dem Ankerteil, die mit Ausprägungen der Seitenteile des Ankerteils erreichbar ist. Damit wird eine Schwächung der Seitenteile, die bei durchgestanzten Lagerbohrungen eintritt, vermieden.

In bevorzugter Ausgestaltung der Erfindung weist die Aufnahmebohrung des Gelenkstücks zumindest abschnittsweise ein dem Gewindestab entsprechendes Innengewinde auf. Um ein Verschwenken des Gewindestabs in das U-Profil des Ankerteils zum Durchschieben durch ein Loch zu ermöglichen, ist der Gewindestab nur soweit in die Aufnahmebohrung des Gelenkstücks eingedreht, dass sein in das Ankerteil einzudrehendes Stirnende sich noch innerhalb des Gelenkstücks befindet.

Statt eines Innengewindes kann die Aufnahmebohrung des Gelenkstücks mit einer Einschlitzung und einem Innendurchmesser versehen sein, der geringfügig kleiner ist als der Gewindeaußendurchmesser des Gewindestabs. Damit wird der Gewindestab in der Aufnahmebohrung klemmend gehalten.

In einer weiteren Ausgestaltung der Erfindung kann am Gelenkstück ein beidseitig in Schwenkrichtung abstehendes und sich am Ankerteil abstützendes Federelement angeordnet sein, das das Gelenkstück nach dem Verschwenken wieder in seine rechtwinklig zum Ankerteil stehende Ausgangslage zurückführt. Mit dieser Ausgestaltung wird erreicht, dass das Ankerteil zwangsweise in eine rechtwinklig zum Gewindestab stehende Stellung verschwenkt und die Flucht zwischen Gewindestab und Gewindeloch des Ankerteils hergestellt wird, die das Einfädeln und Einschrauben des Gewindestabs erleichtert.

Die Erfindung wird nachfolgend anhand eines in der Zeichnung dargestellten Ausführungsbeispiels näher erläutert. Es zeigen:
- Figur 1: den erfindungsgemäßen Kippanker im Seitenschnitt;
- Figur 2: den Kippanker gemäß Figur 1 in einem Profilschnitt;
- Figur 3: eine weitere Ausführungsform des Gelenkstücks;
- Figur 4: eine Darstellung der Montage des Kippankers aus Figur 1; und
- Figur 5: den Kippanker aus Figur 1 im montierten Zustand.

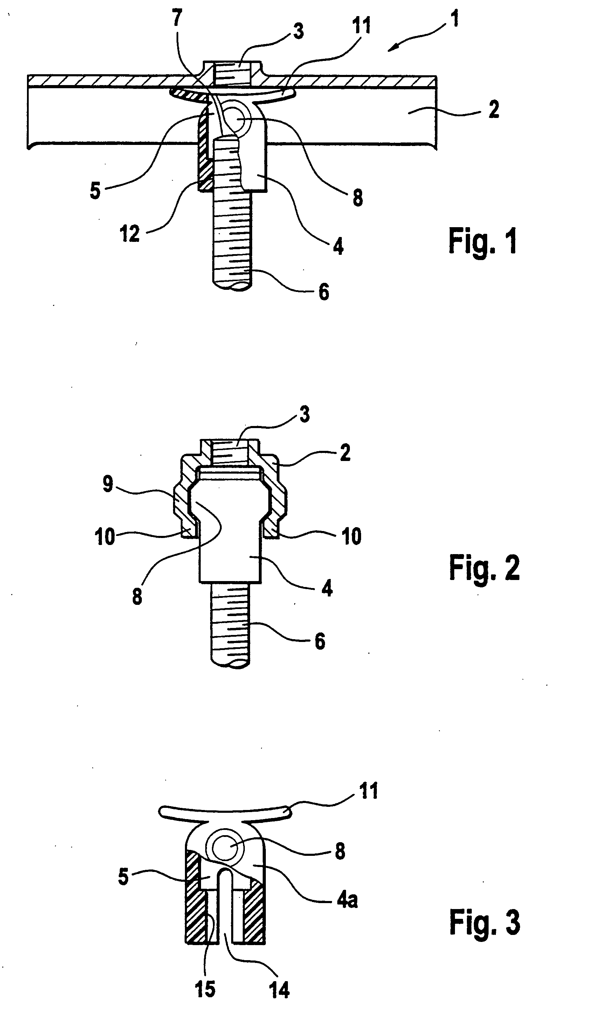

Der in Figur 1 dargestellte, erfindungsgemäße Kippanker 1 ist zur Hohlraumbefestigung, bspw. zur Befestigung einer Lampe an einer Gipskartonplatte an einer Decke vorgesehen. Der Kippanker 1 weist einen im Querschnitt U-förmigen Profilstab als Ankerteil 2 auf. In der Längsmitte des Ankerteils ist ein Gewindeloch 3 angeordnet. Unterhalb des Gewindelochs 3 befindet sich ein Gelenkstück 4 mit einer Aufnahmebohrung 5, in der ein Gewindestab 6 soweit eingesteckt ist, dass dessen Stirnende 7 sich noch innerhalb des Gelenkstücks 4 befindet. Über zwei seitlich am Gelenkstück 4 angeformten Zapfen 8 ist das Gelenkstück 4 in entsprechende Ausprägungen 9 der Seitenteile 10 des Ankerteils 2 eingeclipst (siehe Figur 2). Durch die in den Ausprägungen 9 eingeclipsten Zapfen 8 ist das Gelenkstück 4 gegenüber dem Ankerteil 2 verschwenkbar.

Steht das Gelenkstück 4 mit dem eingesetzten Gewindestab 6 in einer rechtwinkligen Position zur Längsrichtung des Ankerteils 2, fluchtet die Aufnahmebohrung 5 und damit der Gewindestab 6 mit dem im Ankerteil 2 eingebrachten Gewindeloch 3. Diese Position des Gelenkstücks 4 wird durch ein Federelement 11 fixiert, das am Gelenkstück beidseitig in Schwenkrichtung abstehend angeordnet ist. Das Federelement 11 ist einstückig an dem im Spritzgießverfahren aus Kunststoff hergestellten Gelenkstück 4 angeformt.

Der Gewindestab 6 ist in der Ausführung des Gelenkstücks 4 gemäß Figur 1 über ein Innengewinde 12, das sich über einen kurzen Abschnitt der Aufnahmebohrung 5 erstreckt, mit dem Gelenkstück 4 verbunden.

In Figur 3 ist eine weitere Ausführungsform des Gelenkstücks 4a dargestellt, bei der die Aufnahmebohrung 5 eine Einschlitzung 14 und über einen Teilabschnitt 15 einen Innendurchmesser aufweist, der geringfügig kleiner ist als der Gewindeaußendurchmesser des Gewindestabs 6. Bei dieser Ausführungsform des Gelenkstücks 4a wird der Gewindestab 6 klemmend gehalten.

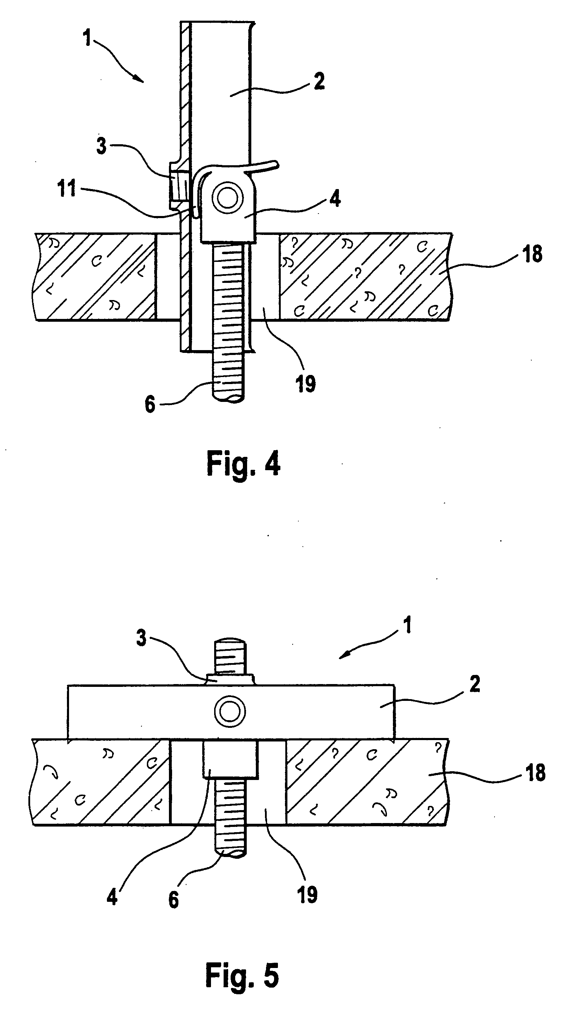

Eine mögliche Verwendung des erfindungsgemäßen Kippankers 1 ist in den Figuren 4 und 5 dargestellt. Zur Befestigung des Kippankers 1 an bspw. einer Gipskartonplatte 18 wird diese mit einem Loch 19 durchbohrt. Der Durchmesser des Lochs 19 ist so groß gewählt, dass das U-förmige Ankerteil 2 in Längsrichtung durchgesteckt werden kann. Zum Durchstecken des Ankerteils 2 wird der Gewindestab 6 wie in Figur 4 dargestellt um 90° zur Seite geschwenkt, so dass er in einer Linie mit dem Ankerteil 2 ausgerichtet ist und in dem U-förmigen Ankerteil 2 einliegt. Das Schwenken des Gewindestabs 6 wird durch das Gelenkstück 4 ermöglicht, das den Gewindestab 6 schwenkbar mit dem Ankerteil 2 verbindet. Beim Verschwenken wird das Federelement 11 elastisch verformt, so dass eine Rückstellkraft entsteht.

Das Ankerteil 2 wird vollständig durch das Loch 19 in der Gipskartonplatte 18 durchgesteckt, bis das Ankerteil 2 auf der Rückseite der Gipskartonplatte 18 austritt. Nach dem Durchstecken wird über die Rückstellkraft des Federelements 11 das Ankerteil 2 wieder in seine rechtwinklig zum Gewindestab 6 stehende Ausgangsstellung zurückgeführt, in der die Aufnahmebohrung 5 des Gelenkstücks 4 und damit der Gewindestab 6 mit dem Gewindeloch 3 im Ankerteil 2 fluchtet. Der Gewindestab 6 wird nunmehr durch die Aufnahmebohrung 5 hindurch in das Gewindeloch 3 des Ankerteils 2 eingeschraubt. Damit ist der Gewindestab 6 zugfest mit dem Ankerteil 2 verbunden, so dass an dem aus der Gipskartonplatte 18 hervorstehenden Gewindestab 6 ein Gegenstand befestigbar ist.

## Patentansprüche

1. Kippanker zur Hohlraumbefestigung mit einem U-förmigen Profil aufweisenden Ankerteil (2) und mit einem Gewindestab (6), der über ein Gelenkstück (4) mit dem Ankerteil (2) verbunden ist, wobei das Ankerteil (2) ein Gewindeloch (3) aufweist, dessen Achse rechtwinklig zum Ankerteil (2) verläuft, und wobei das Gelenkstück (4) eine Aufnahmebohrung (5) für den Gewindestab (6) aufweist, die bei rechtwinkliger Stellung des Gewindestabs (6) zum Ankerteil (2) mit dem Gewindeloch (3) des Ankerteils (2) fluchtet, **dadurch gekennzeichnet, dass** am Gelenkstück (4) ein beidseitig in Schwenkrichtung abstehendes und sich am Ankerteil (2) abstützendes Federelement (11) angeordnet ist, das das Gelenkstück (4) nach dem Verschwenken wieder in seine rechtwinklig zum Ankerteil (2) stehende Ausgangslage zurückführt, und dass das Gelenkstück (4) mit dem Federelement (11) einstückig verbunden ist.

2. Kippanker nach Anspruch 1, **dadurch gekennzeichnet, dass** das Gelenkstück (4) aus Kunststoff besteht und zwei sich gegenüberliegende Zapfen (8) aufweist, die in entsprechende Ausprägungen (9) der Seitenteile (10) des Ankerteils (2) eingeclipst sind.

3. Kippanker nach Anspruch 1, **dadurch gekennzeichnet, dass** die Aufnahmebohrung (5) des Gelenkstücks (4) zumindest abschnittsweise ein dem Gewindestab (6) entsprechendes Innengewinde (12) aufweist.

4. Kippanker nach Anspruch 1, **dadurch gekennzeichnet, dass** die Aufnahmebohrung (5) des Gelenkstücks (4) eine Einschlitzung (14) und über einen Teilabschnitt (15) einen Innendurchmesser aufweist, der geringfügig kleiner ist als der Gewindeaußendurchmesser des Gewindestabs (6).

## Claims

1. Toggle anchor for cavity fixings having an anchoring component (2), which has a U-shaped profile, and having a threaded rod (6) which is connected to the anchoring component (2) by way of an articulation member (4), the anchoring component (2) having a threaded hole (3) the axis of which extends at a right angle to the anchoring component (2), and the articulation member (4) having a receiving bore (5) for the threaded rod (6), which receiving bore (5) is in alignment with the threaded hole (3) of the anchoring component (2) when the threaded rod (6) is in a right-angled position with respect to the anchoring component (2), **characterized in that** there is arranged on the articulation member (4) a spring element (11) which projects to both sides in the direction of pivoting and is supported on the anchoring component (2), which spring element (11) returns the articulation member (4) to its initial position at a right angle to the anchoring component (2) after the pivoting movement, and the articulation member (4) is integrally connected with the spring element (11).

2. Toggle anchor according to claim 1, **characterized in that** the articulation member (4) consists of plastics material and has two opposing pegs (8) which are snapped into corresponding pushed-out parts (9) of the side portions (10) of the anchoring component (2).

3. Toggle anchor according to claim 1, **characterized in that** the receiving bore (5) of the articulation member (4) has, at least in portions, an internal thread (12) corresponding to the threaded rod (6).

4. Toggle anchor according to claim 1, **characterized in that** the receiving bore (5) of the articulation member (4) has a slot (14) and, over a subsidiary portion (15), an internal diameter that is very slightly smaller than the thread outer diameter of the threaded rod (6).

## Revendications

1. Dispositif d'ancrage basculant pour la fixation dans un espace creux avec un élément d'ancrage (2) présentant un profil en forme de U et avec une tige filetée (6) reliée à l'élément d'ancrage (2) via une pièce articulée (4), sachant que l'élément d'ancrage (2) présente un taraudage (3) dont l'axe s'étend en angle droit par rapport à l'élément d'ancrage (2), et sachant que la pièce articulée (4) présente une forure de réception (5) pour la tige filetée (6), laquelle s'aligne avec le taraudage (3) de l'élément d'ancrage (2) avec une position en angle droit de la tige filetée (6) par rapport à l'élément d'ancrage (2), **caractérisé en ce qu'**un élément de ressort (11) est aménagé sur la pièce articulée (4), lequel est en saillie des deux côtés en direction de pivotement et est en appui sur l'élément d'ancrage (2), lequel ramène la pièce articulée (4) dans sa position de départ en angle droit par rapport à l'élément d'ancrage (2) après le pivotement, et **en ce que** la pièce articulée (4) est reliée d'un seul tenant avec l'élément de ressort (11).

2. Dispositif d'ancrage basculant selon la revendication 1, **caractérisé en ce que** la pièce articulée (4) se compose de matière synthétique et présente deux tourillons (8) situés l'un en face de l'autre, lesquels sont encliquetés dans des empreintes (9) correspondantes des parties latérales (10) de l'élément d'ancrage (2).

3. Dispositif d'ancrage basculant selon la revendication 1, **caractérisé en ce que** la forure de réception (5) de la pièce articulée (4) présente au moins sur certains segments un filetage intérieur (12) correspondant à la tige filetée (6).

4. Dispositif d'ancrage basculant selon la revendication 1, **caractérisé en ce que** la forure de réception (5) de la pièce articulée (4) présente un mortaisage (14), et présente un diamètre intérieur sur un segment partiel (15), lequel est légèrement inférieur au diamètre extérieur de filetage de la tige filetée (6).
